# EUROPÄISCHE PATENTANMELDUNG

(11) **EP 1 109 379 A1**
(43) Veröffentlichungstag der Anmeldung: **20.06.2001**
(21) Anmeldenummer: 99125064.8
(22) Anmeldetag: 16.12.1999
(51) Int. Cl.: H04M 1/19, H04M 1/60

(54) **Verfahren zur Optimierung eines Nutzsignals in einem Sprachendgerät sowie Sprachendgerät**

(71) Anmelder: Ascom AG, 3000 Bern 14 (CH)
(72) Erfinder: Baiker, Stefan, 4053 Basel (CH); Fankhauser, Urs, 4513 Langendorf (CH)
(74) Vertreter: Patentanwälte Schaad, Balass, Menzl & Partner AG

(57) **Zusammenfassung**

Das Verfahren dient zur Optimierung eines zu übertragenden Nutzsignals in einem stationären oder mobilen Sprachendgerät (100a), mittels dem ein aus einem Sprach- und einem ersten Hintergrundsignal bestehendes Nutzsignal über ein Mikrofon (1) aufgenommen, gegebenenfalls nach analoger oder digitaler Signalverarbeitung einer Ausgangsstufe (7) zugeführt und von dieser an ein Übertragungsmedium abgegeben wird. Im Sprachendgerät (100a) ist eine Speichereinheit (2) vorgesehen, in der wenigstens ein zweites Hintergrundsignal abgespeichert ist, das von einer Steuereinheit (3) abgerufen und dem zu übertragenden Sprachsignal während der ganzen oder Teilen der Gesprächsdauer überlagert wird.

## Beschreibung

Die Erfindung betrifft ein Verfahren zur Optimierung eines zu übertragenden Nutzsignals in einem Sprachendgerät und ein Sprachendgerät nach dem Oberbegriff des Patentanspruchs 1 bzw. 7.

Bei der Kommunikation zwischen mobilen und/oder stationären. Sprachendgeräten eines Kommunikationssystems, z.B. eines ISDN Telekommunikationssystems, werden Nutzsignale übertragen, die aus Sprach-, Hintergrund- sowie Störsignalen bestehen.

Mittels eines im Sprachendgerät vorgesehenen Mikrofons werden an einer Nachrichtenquelle nebst der Stimme eines Teilnehmers auch in dessen Umgebung herrschende Hintergrundgeräusche aufgenommen. Das vom Mikrofon abgegebene Nutzsignal besteht somit aus Sprach- und Hintergrundsignalen, die im Sprachendgerät und während der Übertragung von meist kleineren Störsignalen überlagert werden, die normalerweise durch Filter, Echo-Kompensatoren und Regeneratoren weitgehend beseitigt werden, bevor sie die Nachrichtensenke erreichen (siehe z.B. [1], Peter Bocker, ISDN-Digitale Netze für Sprach-, Text, Daten-, Video- und Multimediakommunikation, Springer Verlag, Berlin 1997, Seiten 245-246).

Das Nutzsignal kann in analoger oder digitaler Form übertragen werden. Sprachendgeräte, die zur digitalen Signalverarbeitung und Ankopplung an digitale Netzwerke wie ISDN geeignet sind, sind beispielsweise in [1], Kapitel 5.1, Seiten 165-179 beschrieben.

Es ist nun bekannt, dass Hintergrundsignale die Sprachverständigung zwischen zwei Gesprächspartnern erheblich beeinflussen, gegebenenfalls erheblich beeinträchtigen können.

Insbesondere wurde festgestellt, dass nebst lauten Hintergrundgeräuschen, die die Verständlichkeit beeinträchtigen, auch Geräusche geringerer Intensität als störend empfunden werden können.

Der Erfindung liegt daher die Aufgabe zugrunde, ein Verfahren anzugeben, mittels dem ein zu übertragendes Nutzsignal in einem stationären oder mobilen Sprachendgerät optimiert werden kann. Ferner ist ein zur Anwendung des Verfahrens geeignetes Sprachendgerät anzugeben.

Die Lösung dieser Aufgabe gelingt mit den in Anspruch 1 bzw. 7 angegebenen Merkmalen.

Das erfindungsgemässe Verfahren erlaubt die Optimierung eines zu übertragenden Nutzsignals in einem stationären oder mobilen Sprachendgerät. Das aus einem Sprach- und einem ersten Hintergrundsignal bestehende Nutzsignal wird dazu einer mit einer Ausgangsstufe verbundenen Additions-stufe zugeführt und dort durch ein aus einer Speichereinheit abrufbares zweites Hintergrundsignal überlagert. Das zusammen mit dem Sprachsignal aufgenommene erste Hintergrundsignal wird vorzugsweise durch ein Filter unterdrückt, bevor das zweite Hintergrundsignal dem Nutz-bzw. Sprachsignal überlagert wird.

Das zweite Hintergrundsignal wird vorzugsweise gebildet, indem ein aktuelles erstes Hintergrundsignal mittels dem Mikrofon des Sprachendgerätes aufgenommen oder ein Signal von einer weiteren Signalquelle in die Speichereinheit übertragen und dort gespeichert wird.

Ein abgespeichertes zweites Hintergrundsignal wird vorzugsweise in Abhängigkeit der eingestellten Rufnummer und/oder des Datums und/oder der Tageszeit oder zufällig ausgewählt.

Zur Gewährleistung optimaler Verständlichkeit wird die Intensität des aus der Speichereinheit abgerufenen zweiten Hintergrundsignals vorzugsweise in Abhängigkeit der Intensität des Sprachsignals geregelt, vorzugsweise entsprechend der mittleren Sprachleistung nachgeführt.

Zur optimalen Trennung des ersten Hintergrundsignals vom Sprachsignal erfolgt vorzugsweise eine Adaption an das Sprachsignal bzw. an die Stimme des Benutzers des Sprachendgerätes.

Das Verfahren erlaubt somit die Beseitigung von störenden Hintergrundgeräuschen von hoher oder geringerer Intensität. Durch das zweite, den Gegebenheiten angepasste Hintergrundsignal kann nicht nur auf akustischer Ebene die Verständigung zwischen den Gesprächspartnern gefördert werden. Anstelle störender Hintergrundgeräusche kann z.B. klassische Musik eingespielt werden, so dass auch auf nicht-technischer Ebene eine Verbesserung der Verständigung erzielt wird.

Ferner sind auch Anwendungen denkbar bei denen dem Gesprächspartner nicht die real existierende, sondern eine bevorzugte virtuelle Situation am Standort des Benutzers vermittelt wird. Dies ist insbesondere für Dienstleistungsanbieter einschliesslich Notfall- und Hilfsdiensten besonders nützlich, da der Informationsaustausch durch diese Massnahmen begünstigt werden kann.

Das erfindungsgemässe Verfahren kann in beliebigen stationären oder mobilen Sprachendgeräten, so z.B. in ISDN-, GSM-, UMTS- oder DECT-, aber auch in klassischen analogen Telekommunikationsendgeräten oder einfachen Funkgeräten angewendet werden.

Die Erfindung wird nachstehend anhand einer Zeichnung näher erläutert.

Die Figur zeigt in schematischer Darstellung den Aufbau eines erfindungsgemässen mobilen oder stationären Sprachendgerätes 100a, das über eine Übertragungsleitung 13 oder über eine Antenne 8 per Funk in Kontakt mit einem weiteren Sprachendgerät 100b treten kann. Das Sprachendgerät 100a weist, eine Steuereinheit 3 auf die mit einer Tastatur 4, einer Anzeigevorrichtung 5 und einer Speichereinheit 2 verbunden ist.

Ferner ist ein Mikrofon 1 vorgesehen, von dem ein aus einem Sprach- und einem ersten Hintergrundsignal bestehendes Nutzsignal über ein Filter 12, an den ersten Eingang 61 einer Additionsstufe 6 und von deren Ausgang über eine z.B. einen Ein- und einen Ausgangsverstärker enthaltende Kopplungsstufe 7 der Antenne 8 oder der Übertragungsleitung 13 zuführbar ist. Das Mikrofon 1 ist ferner über einen Analog/Digital Wandler 9 mit der Speichereinheit 2 verbunden, die ihrerseits über einen Digital/Analog Wandler 10 mit dem zweiten Eingang 62 der Additionsstufe 6 verbunden ist.

Von der Antenne 8 oder der Übertragungsleitung 13 zugeführte Nutzsignale des weiteren Sprachendgerätes 100b werden nach allfälliger Verarbeitung in der Kopplungsstufe 7 bzw. in nicht dargestellten Eingangsstufen an einen Lautsprecher 11 abgegeben.

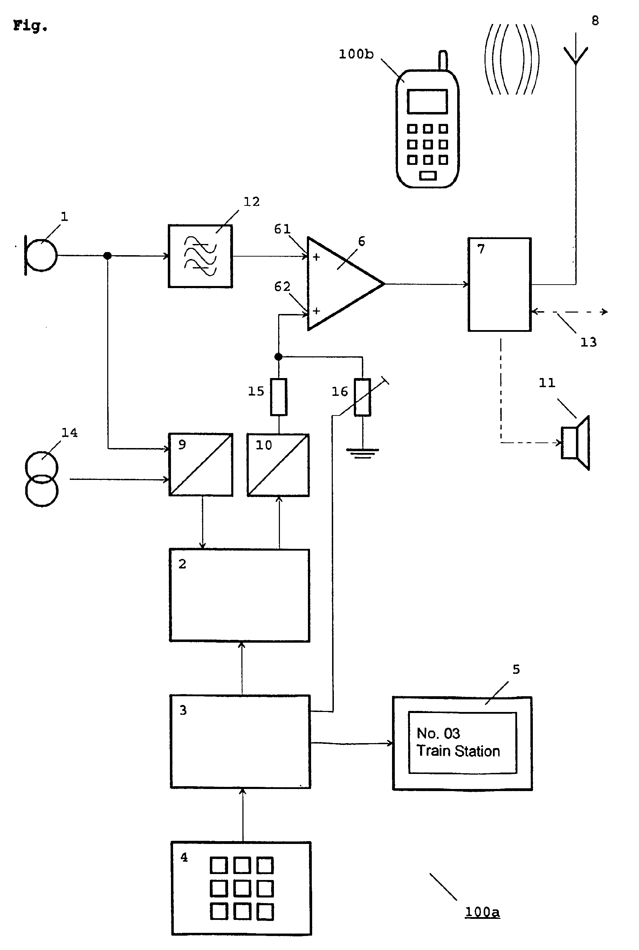

Sofern ein Anschluss an ein Telekommunikationsnetz vorgesehen ist, weist das Sprachendgerät 100a ferner Steuer- bzw. Signalisierungsmodule auf, die zur Durchführung eines Verbindungsaufbaus dienen (siehe z.B. [1], Seite 171, Bild 5.5). In Abhängigkeit des gewählten Übertragungsverfahrens sind ferner Module vorgesehen, durch die eine entsprechende analoge oder digitale Signalverarbeitung (Digitalisierung, Codierung, Rahmenbildung) durchgeführt wird.

Erfindungsgemäss wird in der Additionsstufe 6 dem vom Mikrofon 1 zugeführten aus einem Sprach- und gegebenenfalls einem ersten Hintergrundsignal bestehenden Nutzsignal ein zweites Hintergrundsignal überlagert, das aus der Speichereinheit 2 abgerufen und über den Digital/Analog Wandler 10 der Additionsstufe 6 zugeführt wird.

Von vorzugsweise mehreren zweiten Hintergrundsignalen, die in der Speichereinheit 2 abgespeichert sind, wird eines davon z.B. manuell über die Tastatur 4 oder automatisch durch die Steuereinheit 3, vorzugsweise in Abhängigkeit der eingestellten Rufnummer und/oder des Datums und/oder der Tageszeit oder zufällig ausgewählt.

Die Überlagerung des Nutzsignals durch das zweite Hintergrundsignal erfolgt vorzugsweise bei Gesprächsaufnahme bzw. unmittelbar nach dem Verbindungsaufbau. Bei manueller Bedienung kann ein zweites Hintergrundsignal beispielsweise auch zu einem beliebigen Zeitpunkt nach dem Verbindungsaufbau zu- und/oder wieder abgeschaltet werden.

Die Verknüpfung eines zweiten Hintergrundsignals mit einer Rufnummer hat den Vorteil, dass im Verkehr mit Gesprächspartnern ein einheitliches Erscheinungsbild entsteht. Beispielsweise wird im Verkehr mit Geschäftspartnern jeweils dezente Hintergrundmusik gewählt, um ein angenehmes Gesprächsklima, bei optimaler Verständlichkeit zu erzeugen. Die Auswahl in Abhängigkeit von Datum und/oder Tageszeit erlaubt die automatische Anpassung an zu erwartende Hintergrundgeräusche.

Das eingestellte Hintergrundsignal gegebenenfalls auch dessen Intensität werden vorzugsweise auf der Anzeigevorrichtung 5 angezeigt.

In einer vorzugsweisen Ausgestaltung der Erfindung ist die Intensität des aus der Speichereinheit 2 abgerufenen zweiten Hintergrundsignals steuerbar oder regelbar. Zum Beispiel kann der Benutzer über die Tastatur 4 eine gewünschte Intensität vorgeben. Vorzugsweise erfolgt jedoch eine Regelung in Abhängigkeit der Intensität des Sprachsignals, die über einen bestimmten Zeitabschnitt gemittelt wird.

Die Einstellung der Intensität erfolgt im Sprachendgerät 100a, indem das vom Digital/Analog Wandler 10 abgegebene Signal über einen ersten Widerstand 15 einem Eingang der Additionsstufe 6 zugeführt wird, der zusätzlich mit einem zweiten Widerstand 16 verbunden ist, der mittels der Steuereinheit 3 steuerbar ist.

Durch Überlagerung des zweiten Hintergrundsignals mit dem vom Mikrofon 1 aufgenommenen Nutzsignal entsteht ein Gemisch von zwei Hintergrundsignalen, das als störend empfunden werden kann. Vorzugsweise wird das erste Hintergrundsignal daher durch das Filter 12 gedämpft, so dass im Wesentlichen nur das Sprachsignal und das zweite Hintergrundsignal in der Additionsstufe 6 summiert werden.

Zur optimalen Trennung des Sprachsignals vom ersten Hintergrundsignal wird durch das Filter 12 vorzugsweise eine Adaption an das Sprachsignal durchgeführt. Derartige Filtertechniken sind beispielsweise in [2], U.S. Patent 5,884,251 beschrieben. Dabei wird das Frequenzspektrum des Sprachsignals mittels verschiedenen Filterbausteinen durch iterative Signalverarbeitung und Prädiktion ermittelt. Nach Ermittlung des Frequenzspektrums des Sprachsignals wird die Durchlasskurve des Filters entsprechend angepasst.

Die Aufnahme von zweiten Hintergrundsignalen in die Speichereinheit 2 erfolgt vorzugsweise mittels dem Mikrofon 1, durch das ein aktuelles (erstes) Hintergrundsignal erfasst und über den Analog/Digital Wandler 9 in die Speichereinheit 2 übertragen wird. Zweite Hintergrundsignale können indes auch von weiteren Signalquellen 14 gegebenenfalls nach Analog/Digital Wandlung in die Speichereinheit 2 aufgenommen werden.

Das erfindungsgemässe Verfahren kann in beliebigen, vorzugsweise mobilen Sprachendgeräten, so z.B. in ISDN-, GSM-, UMTS- oder DECT-, aber auch in klassischen analogen Telekommunikationsendgeräten oder einfachen Funkgeräten verwendet werden. Ein erfindungsgemässes Sprachendgerät kann auch Teil eines Kommunikationsendgerätes sein, das zusätzlich zur Übertragung von Bildinformationen und/oder weiteren Informationen geeignet ist.

In einer vorzugsweisen Ausgestaltung kann in einem erfindungsgemässen Sprachendgerät auch ein Signalprozessor verwendet werden, in dem die in der Figur dargestellten Bausteine 2, 3, 6, 9, 10, 12, 15 und/oder 16 als hardwareoder softwaremässig realisiert sind.
[1] Peter Bocker, ISDN-Digitale Netze für Sprach-, Text, Daten-, Video- und Multimediakommunikation, Springer Verlag, Berlin 1997
[2] U.S. Patent 5,884,251 (Kim et al.)

## Patentansprüche

1. Verfahren zur Optimierung eines zu übertragenden Nutzsignals in einem stationären oder mobilen Sprachendgerät (100a), mittels dem ein aus einem Sprachund einem ersten Hintergrundsignal bestehendes Nutzsignal über ein Mikrofon (1) aufgenommen, gegebenenfalls nach analoger oder digitaler Signalverarbeitung einer Ausgangsstufe (7) zugeführt und von dieser an ein Übertragungsmedium abgegeben wird, **dadurch gekennzeichnet**, dass im Sprachendgerät (100a) eine Speichereinheit (2) vorgesehen ist, in der wenigstens ein zweites Hintergrundsignal abgespeichert ist, das von einer Steuereinheit (3) abgerufen und dem zu übertragenden Nutzsignal während der ganzen oder Teilen der Gesprächsdauer überlagert wird.

2. Verfahren nach Anspruch 1, **dadurch gekennzeichnet**, dass ein vom Mikrofon (1) aufgenommenes aktuelles erstes Hintergrundsignal oder ein Signal von einer weiteren Signalquelle in die Speichereinheit (2) übertragen und von dort, nun als zweites Hintergrundsignal, mittels der Steuereinheit (3) bedarfsweise abgerufen wird.

3. Verfahren nach Anspruch 1 oder 2, **dadurch gekennzeichnet**, dass ein abgespeichertes zweites Hintergrundsignal manuell über die Tastatur (4) des Sprachendgerätes (100a) oder in Abhängigkeit der eingestellten Rufnummer und/oder des Datums und/oder der Tageszeit oder zufällig ausgewählt wird.

4. Verfahren nach Anspruch 1, 2 oder 3, **dadurch gekennzeichnet**, dass die Intensität des aus der Speichereinheit (2) abgerufenen zweiten Hintergrundsignals insbesondere in Abhängigkeit der Intensität des Sprachsignals geregelt wird.

5. Verfahren nach einem der Ansprüche 1-4, **dadurch gekennzeichnet**, dass das zusammen mit dem Sprachsignal aufgenommene erste Hintergrundsignal durch ein Filter (12) unterdrückt wird, bevor das aus der Speichereinheit (2) abgerufene zweite Hintergrundsignal dem Sprachsignal überlagert wird.

6. Verfahren nach Anspruch 5, **dadurch gekennzeichnet**, dass durch das Filter (12) eine Adaption an das Sprachsignal durchgeführt wird.

7. Mobiles oder stationäres Sprachendgerät (100a) zur Anwendung des Verfahrens nach einem der Ansprüche 1-6, mit einer Speichereinheit (2), einer Steuereinheit (3) und einem Mikrofon (1), von dem ein aus einem Sprach- und einem ersten Hintergrundsignal bestehendes Nutzsignal über eine Kopplungsstufe (7) an ein Übertragungsmedium abgebbar ist, **dadurch gekennzeichnet**, dass eine Additionsstufe (6) vorgesehen ist, in der, gesteuert durch die Steuereinheit (3), dem vom Mikrofon (1) zugeführten Nutzsignal ein aus der Speichereinheit (2) abrufbares zweites Hintergrundsignal überlagert werden kann.

8. Sprachendgerät (100a) nach Anspruch 7, **dadurch gekennzeichnet**, dass ein mittels dem Mikrofon (1) aufgenommenes aktuelles erstes Hintergrundsignal oder ein Signal von einer weiteren Signalquelle gegebenenfalls über einen Analog/Digital Wandler (9) in die Speichereinheit (2) übertragbar und von dort durch die Steuereinheit (3) gegebenenfalls über einen Digital/Analog Wandler (10) wieder abrufbar ist.

9. Sprachendgerät (100a) nach Anspruch 7 oder 8, **dadurch gekennzeichnet**, dass ein abgespeichertes zweites Hintergrundsignal manuell über die Tastatur (4) des Sprachendgerätes (100a) oder in Abhängigkeit der eingestellten Rufnummer und/oder des Datums und/oder der Tageszeit oder zufällig auswählbar ist.

10. Sprachendgerät (100a) nach Anspruch 7, 8 oder 9, **dadurch gekennzeichnet**, dass die Intensität des aus der Speichereinheit (2) abgerufenen zweiten Hintergrundsignals insbesondere in Abhängigkeit der Intensität des Sprachsignals manuell oder durch die Steuereinheit (3) regelbar ist.

11. Sprachendgerät (100a) nach einem der Ansprüche 7-10, **dadurch gekennzeichnet,** dass ein zur Unterdrückung des ersten Hintergrundsignals geeignetes Filter (12) vorgesehen ist, über das das vom Mikrofon (1) aufgenommene Nutzsignal der Additionsstufe (6) zuführbar ist.

12. Sprachendgerät (100a) nach Anspruch 11, **dadurch gekennzeichnet,** dass durch das Filter (12) eine Adaption an das Sprachsignal durchführbar ist.
